Europäisches Patentamt

European Patent Office

Office européen des brevets

(19)

(11) Publication number: **0 137 559**
**B1**

(12) **EUROPEAN PATENT SPECIFICATION**

(45) Date of publication of patent specification: **01.06.88**

(51) Int. Cl.⁴: **H 04 N 1/036**

(21) Application number: **84201383.1**

(22) Date of filing: **27.09.84**

(54) **Exposure device.**

(30) Priority: **10.10.83 NL 8303470**

(43) Date of publication of application:
**17.04.85 Bulletin 85/16**

(45) Publication of the grant of the patent:
**01.06.88 Bulletin 88/22**

(84) Designated Contracting States:
**DE FR GB NL**

(56) References cited:
**EP-A-0 011 003**
**GB-A-1 303 657**
**US-A-3 441 668**
**US-A-3 995 110**

(73) Proprietor: **Océ-Nederland B.V.**
**St. Urbanusweg 43**
**NL-5914 CC Venlo (NL)**

(72) Inventor: **Rongen, Josephus Wilhelmus**
**Brechtstraat 47**
**NL-5924 BX Venlo (NL)**
Inventor: **van Cooten, Robertus**
**Burgemeester van Leentstraat 32**
**NL-5971 AH Grubbenvorst (NL)**

(74) Representative: **Hanneman, Henri W.A.M. et al**
**Océ-Nederland B.V. Patents and Information**
**Postbus 101**
**NL-5900 MA Venlo (NL)**

Courier Press, Leamington Spa, England.

## Description

This invention relates to an exposure device for imagewise exposing a movable light-sensitive layer to a scanner beam of light dot by dot along a line on this layer, including a light source for generating a beam of light, and means for modulating this beam of light with electronic information, optical scanning means positioned between the light source and the layer, and wherein the scanned beam so modulated is subject to substantial deviation of its location perpendicular relative to the line of exposure.

An exposure device of this kind is known from US Patent US-A-3 995 110, which describes a laser printer in which a laser emits a beam of light modulated with supplied electronic information. The modulated beam is projected via a lens system on to a rotating polygonal mirror which deflects the beam to a light-sensitive layer. By rotation of the mirror and simultaneous modulation of the beam the beam dot by dot writes on the light-sensitive layer along a line. By conveying the light-sensitive layer perpendicularly to the scanning direction it is possible to build up a complete image dot-wise. The distinct surfaces of a polygonal mirror always have some inaccuracies and will therefore each occupy a slightly different angle to the axis of rotation. As a result, the deflected beam will not always meet the light-sensitive layer at exactly one and the same imaginary line. This deviation is termed "run-out".

In the above-mentioned Patent US-A-3 995 110, the run-out is reduced by disposing a semi-cylindrical lens between the polygonal mirror and the light-sensitive layer and in the laser beam. The known apparatus has some disadvantages. For example, although the use of a semi-cylindrical lens reduces the beam run-out, the latter will still always be present. Also, an optimum has to be found between image-focussing and minimum run-out in respect of the positioning of the lens. Extensive and time-consuming adjustment procedures are required for this purpose.

The object of the invention is to provide an exposure device in which these and other disadvantages are obviated.

According to the invention, this object is attained in that in an exposure device as described in the outset, means are disposed across the path of the scanned beam for blocking passage to the light sensitive layer of portions of this beam deviated perpendicular away from the line of exposure and within the blocking means a narrow light transmitting slit extending parallel to the line of exposure, the width of the slit being less than 150 µm and so much less than the dimension at the slit of the scanned beam in the direction of the slit width that the slit passes to the layer only limited portions of the modulated beam, which are substantially centered on the line.

By using a narrow slit of this kind, it is attained by the use of simple means that a beam of light always describes at least one and the same line, also when run-out occurs. The requirements in respect of the focusing of the beam are also reduced by using a slit of this kind.

Other features and advantages of the invention will be apparent from the following description with reference to the accompanying drawings wherein:

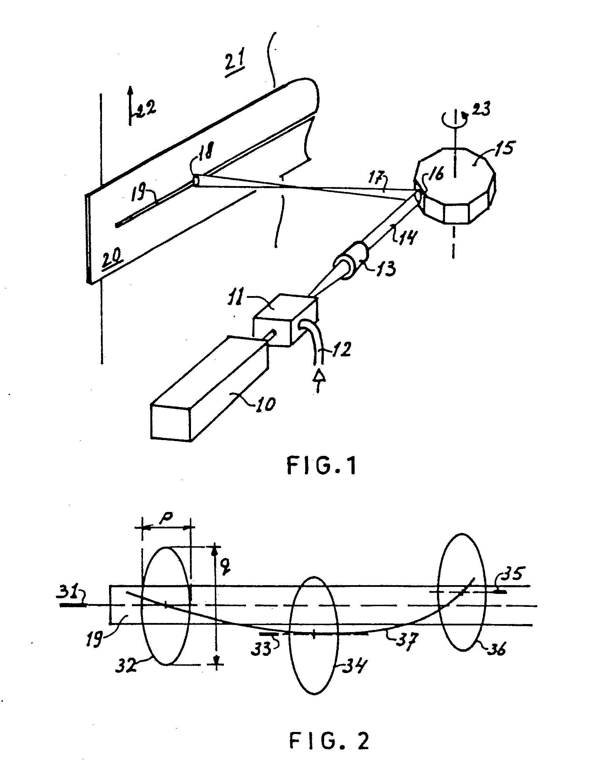

Fig. 1 is a schematic representation of an exposure device according to the invention, and Fig. 2 is a detail of the exposure slit of the exposure device of Fig. 1 with different light beams.

Fig. 1 schematically represents the exposure device according to the invention. The laser light source 10 delivers a monochromatic parallel beam of light which is modulated in modulator 11 with video information fed via line 12. This beam is projected via lens system 13 on to a reflecting surface 16 of a polygon 15 rotating in the direction of arrow 23. The reflected beam 17 impinges on the light-sensitive layer 21. Light-sensitive layer 21 is an electrophotographic layer which is charged and whose charge image produced by exposure can be developed in known manner with toner. A plate 20 provided with a light-transmitting slit 19 is disposed near and parallel to the light sensitive layer 21 and between the polygon and the light-sensitive layer 21. The width of this slit is, for example, 80 micrometer, but slits of a different width, preferably less than 150 µm, can also be used. The beam of light 17 is so adjusted by means of lens system 13 that the focusing of the beam takes place in front of the slit 19. A light spot 18 thus forms on the slit 19 and is larger, at least in the direction of the slit width, than the width of the slit 19. The size of the light spot 18 on slit 19 can be varied by choosing the focusing of beam 17 at a different place. As the polygon 15 rotates in the direction of arrow 23, light spot 18 will move from right to left over slit 19 as considered at Fig. 1 and expose the light-sensitive layer 21 dot by dot along one line in accordance with the video information fed via 12.

According to the method described in Patent US-A-3 995 110, beam 17 would have to be accurately focused on the light-sensitive layer 21. This condition can be satisfied only approximately, since the distance between the reflecting surface 16 of polygon 15 and the middle of the light-sensitive layer 21 is not equal to the distance between the reflecting surface 16 of polygon 15 and the side edges of layer 21. Consequently, upon focusing the beam on the middle of the light-sensitive layer 21, a small light spot will form which will become increasingly larger upon movement of the beam towards the side edges. In the exposure device according to the invention, the exposed area always remains constant as a result of using the width-restricting slit.

Fig. 2 represents the slit 19 in detail. The width of this slit is, for example, 80 micrometer and line 31 denotes the centre of this slit. The centre of the light spot 32 coincides exactly with the centre of the slit 19. If run-out occurs, the centre of the beam of light will no longer coincide exactly with line 31 but, for example, with line 33. The associated light spot 34 still covers the complete width of slit 19. Light spot 36 with its associated centreline 35 of the beam also covers the slit still completely over the width. It is clear that the projected line 37 which would be exposed in the absence of the slit 19 has considerably more variation in linearity than a projected line exposed with the use of a slit.

The beams projected on the slit can have any form, provided that the dimension of such a beam in the direction of the slit width and at the slit is larger than the width of the slit. Preferably, oval beams are used as represented in Fig. 2. These oval beams form if the laser beam is modulated with, for example, a suitably arranged acoustooptic modulator. The beam of light is generally so adjusted that the width of the light spot corresponds to the width $p$ of the slit 19, while the length of the light spot $q$ corresponds to two to three times the width of slit 19. In this way, dots of 80 x 80 micrometer are written, while run-out errors of about 100 micrometer can be compensated.

The invention is in no way restricted to the embodiment described. For example, the narrow slit can also be used in an exposure device made up of one or more LED arrays imaged on a light sensitive layer by one or more lenses. A device of this kind described in US patent 4 107 687 comprises a large number of arrays of 5 LED's, and with one lens per array in order to focus the beams of light from the 5 LED's on the light-sensitive layer. All these arrays and lenses must be so arranged that one straight line is exposed dot-wise on the light-sensitive layer. Accordingly extensive adjustment means are required to achieve this.

By disposing a narrow slit between the lenses and the light-sensitive layer, the requirements in respect of alignment of the arrays and lenses are greatly reduced. The beams of light incident on the slit must, as already indicated, be larger than the width of the slit. This can be achieved, for example, by adapting the geometry of the light sources (elongate LED's). By so moving the lenses that focusing takes place between the slit and the lenses it is also possible to satisfy this condition in a simple manner.

Another embodiment of an exposure device according to the invention is obtained by using a cathode-ray tube as the light source. In that case, according to the image, a line-window is excited dot-wise on a cathode-ray tube. These dots are imaged on a light-sensitive layer in substantially direct contact via a lens or via fibre optics. The excited dots of the cathode-ray tube are fairly large, and this restricts the resolution of the exposure system. The use of a narrow slit in front of the light-sensitive layer also increases the resolution in this case.

If, in order to increase the print width, more cathode-ray tubes are used side by side, complex problems arise in connection with alignment of the system. All the cathode-ray tubes must image their image-forming line on one straight line on the light-sensitive layer. The use of a slit, in combination with the relatively large beams of light of the cathode-ray tube, will make this alignment less critical.

## Claims

1. An exposure device for imagewise exposing a movable light-sensitive layer (21) to a scanned beam of light (17) dot by dot along a line on this layer, including a light source (10) for generating a beam of light, and means (11) for modulating this beam of light with electronic information, optical scanning means (13, 16) positioned between the light source (10) and the layer (21), and wherein the scanned beam so modulated is subject to substantial deviation of its location perpendicular relative to the line of exposure, characterised in, means (20) disposed across the path of the scanned beam (17) for blocking passage to the light-sensitive layer (21) of portions of this beam (17) deviated perpendicular away from the line of exposure (31) and within the blocking means (20) a narrow light transmitting slit (19) extending parallel to the line of exposure (31), the width of the slit (19) being less than 150 μm and so much less than the dimension (18) at the slit (19) of the scanned beam in the direction of the slit width that the slit passes to the layer only limited portions of the modulated beam, which are substantially centered on the line (31).

2. An exposure system according to claim 1, characterised in that the light source (10) is a laser.

3. An exposure device according to claim 1, characterised in that the light source (10) used is a cathode ray tube.

4. An exposure device according to claim 1, characterised in that the light source (10) used is a LED array.

5. An exposure device according to one of the previous claims, characterised in that the modulated beam of light (17) is focussed before the slit (19) or behind the light-sensitive layer (21).

6. An exposure device according to claim 2, the device further including a polygonal mirror (15) rotatable to scan the light-sensitive layer (21) dot by dot along a line thereacross with a beam (17) derived from the laser (10) and a lens system (13) in the modulated beam for projecting a modulated laser beam onto the mirror (15), and thence in part through the slit (19) to the layer (21), the lens system (13) being operative to form a modulated laser beam focussed at a location intermediate the slit (19) and the mirror (15) so that a modulated laser beam divergent in the direction of the slit width is incident on the slit (19).

## Patentansprüche

1. Belichtungseinrichtung zur bildmässigen Belichtung einer beweglichen lichtempfindlichen Schicht (21) mit einem abtastenden lichtstrahl (17), Punkt für Punkt längs einer Zeile auf dieser Schicht, mit einer Lichtquelle (10) zur Erzeugung eines Lichtstrahls, Mitteln (11) zur Modulation dieses Lichtstrahls entsprechend elektronischer Information und mit zwischen der Lichtquelle (10) und der Schicht (21) angeordneten optischen Abtastmitteln (13, 16), wobei der derart modulierte Abtaststrahl einer wesentlichen positionsabweichung senkrecht zur Belichtungszeile unterliegt, gekennzeichnet durch im Strahlengang des Abtaststrahls (17) angeordnete Mittel (20) zum Ausblenden von Teilbereichen dieses Strahls (17), die rechtwinklig von der Belichtungszeile (31) abweichen, vor der lichtempfindlichen Schicht (21), und durch einen parallel zu der Belichtungszeile (31) in den Ausblendmitteln (20) verlaufenden schmalen Lichtdurchtrittsspalt (19), dessen Breite weniger als 150 µm beträgt und um so viel kleiner ist als die Abmessung (18) des Abtaststrahls in Richtung der Spaltbreite an der Stelle des Spaltes (19), dass der Spalt nur begrenzte Teilbereiche des modulierten Strahls, die im wesentlichen auf die Zeile (31) zentriert sind, zu der Schicht durchlässt.

2. Belichtungseinrichtung nach Anspruch 1, dadurch gekennzeichnet, dass die Lichtquelle (10) ein laser ist.

3. Belichtungseinrichtung nach Anspruch 1, dadurch gekennzeichnet, dass die verwendete Lichtequelle (10) eine Kathodenstrahlröhre ist.

4. Belichtungseinrichtung nach Anspruch 1, dadurch gekennzeichnet, dass die verwendete Lichtquelle (10) eine Zeile von Lumineszenzdioden ist.

5. Belichtungseinrichtung nach einem der vorstehenden Ansprüche, dadurch gekennzeichnet, dass der modulierte Lichtstrahl (17) vor dem Spalt (19) oder hinter der lichtempfindlichen Schicht ' (21) fokussiert ist,

6. Belichtungseinrichtung nach Anspruch 2, die weiterhin einen drehbaren Polygonspiegel (15) zur punktweisen Abtastung der lichtempfindlichen Schicht (21) längs einer Zeile derselben met einem von dem Laser (10) abgeleiteten Strahl (17) und ein in dem modulierten Strahl angeordnetes Linsensystem (13) zur Projektion des modulierten Laserstrahls auf den Spiegel (15) und sodann teilweise durch den Spalt (19) auf die Schicht (21) aufweist, wobei das Linsensystem (13) einen modulierten Laserstrahl erzeugt, der an einer Stelle zwischen dem Spalt (19) und dem Spiegel (15) fokussiert ist, so dass auf den Spalt (19) ein in Richtung der Breite des Spaltes divergierender modulierter Laserstrahl auftrifft.

**Revendications**

1. Dispositif d'exposition destiné à impressionner point par point une couche photosensible mobile (21) à un faisceau lumineux (17) soumis à balayage le long d'une ligne sur cette couche, qui comporte une source lumineuse (10) destinée à générer un faisceau de lumière et des moyens (11) propres à moduler ce faisceau de lumière par de l'information électronique, des moyens de balayage optique (13, 16) étant placés entre la source lumineuse (10) et la couche (21), et dans lequel le faisceau soumis à balayage ainsi modulé subit une déviation appréciable de sa position perpendiculairement à la ligne d'exposition, caractérisé par des moyens de masquage (20) disposés transversalement au trajet du faisceau soumis à balayage (17) à l'effet d'empêcher des portions de ce faisceau (17) s'écartant de la ligne d'exposition (31) perpendiculairement à celle-ci d'atteindre la couche photosensible (21) et une fente étroite de transmission de lumière (19) s'étendant parallèlement à la ligne d'exposition (31) et ménagée dans les moyens de masquage (20), dont la largeur est inférieure à 150 µm, c'est-à-dire largement inférieure à la dimension (18) au niveau de la fente (19) du faisceau soumis à balayage dans le sens de la largeur de la fente, si bien qu'il ne parvient à la couche que des portions limitées du faisceau modulé, qui sont sensiblement centrées sur la ligne (31).

2. Dispositif d'exposition selon la revendication 1, caractérisé en ce que la source lumineuse (10) est un laser.

3. Dispositif d'exposition selon la revendication 1, caractérisé en ce que la source lumineuse (10) est un tube à rayons cathodiques.

4. Dispositif d'exposition selon la revendication 1, caractérisé en ce que la source lumineuse (10) est un réseau de diodes électroluminescentes.

5. Dispositif d'exposition selon l'une des revendications précédentes, caractérisé en ce que le faisceau de lumière modulé (17) est focalisé en avent la fente (19) ou en derrière la couche photosensible (21).

6. Dispositif d'exposition selon la revendication 2, comportant en outre un miroir polygonal (15) mobile en rotation de manière à balayer la couche photosensible (21) point par point le long d'une ligne transversalement à celle-ci avec un faisceau (17) provenant du laser (10) et un système de lentilles (13) dans le faisceau modulé pour projeter sur le miroir (15) un faisceau laser modulé traversant ensuite en partie la fente (19) pour arriver sur la couche (21), le système de lentilles (13) étant adapté à former un faisceau laser modulé focalisé en un emplacement situé entre la fente (19) et le miroir (15) en sorte qu'il tombe sur la fente (19) un faisceau laser modulé divergent dans le sens de la largeur de la fente.

FIG.1

FIG. 2